# EUROPEAN PATENT SPECIFICATION

(11) **EP 1 075 192 B1**
(45) Date of publication and mention of the grant of the patent: **18.09.2002**
(21) Application number: 99916810.7
(22) Date of filing: 29.04.1999
(51) Int. Cl.: A23G 9/26

(54) **GRIPPERS FOR USE IN EXTRACTING FROZEN STICK CONFECTIONS**
GREIFER ZUR ENTNAHME VON GEFRORENEM EIS AM STIEL
SYSTEME DE PREHENSION POUR L'EXTRACTION DE CONFISERIES DE BATONNETS CONGELES

(30) Priority: 01.05.1998 DK 60198
(43) Date of publication of application: 14.02.2001
(73) Proprietor: GRAM A/S, 6500 Vojens (DK)
(72) Inventor: EICHLER, Klaus, DK-6200 Aabenraa (DK); WEITLING, Kurt, DK-6100 Haderslev (DK)
(74) Representative: Nielsen, Leif
(86) International application number: DK9900238
(87) International publication number: WO99056560

(56) References cited:
- US-A- 4 392 803
- US-A- 5 620 721

## Description

The present invention relates to a gripper for use in extracting ice lollies frozen in moulds, which gripper comprises a housing having a rear wall and two side walls extending therefrom and with a spring loaded clip arranged for squeezing firmly the ice lolly against the rear wall of the housing, and which can be released by means of an arm suspended in the side walls of the housing, and which has a part for engaging the clip.

When manufacturing ice lollies grippers are used to seize the lolly and thereby pull the frozen ice lolly up from its mould. Usually a row of grippers are placed side by side on an extracting unit which is intended to be rotated above a freezing mould which also rotates. The extraction takes place when a rod with a number of grippers are aligned above a row of moulds.

The grippers are activated by means of mechanisms arranged for this purpose and which are connected to the rod on which the grippers are mounted. The activation may for example take place be means of cams, camguides or the like, acting on the arm which is suspended in the side wall of the housing so that this pivots in the direction against the action of the spring and thereby releases the ice lolly.

Usually the ice lolly is placed in the gripper by inserting it in the interspace between the clip and the rear wall of the housing.

The known grippers imply several drawbacks. The grippers are expensive to make as they consist of several single parts. In order to assembly the single parts to the final gripper, welding operations are required. Furthermore the known gripper is arranged with rod connections between the manoeuvring arm and the clip. In order to achieve a correct position of the clip so that an ice lolly may be mounted in the rod there is used special stops.

Besides a complicated construction and a difficult mounting, the known gripper is furthermore difficult to clean in an effective way. This is very disadvantageous as the gripper is used in an environment, where there is very great requirements for the cleaning due to the risk of bacterial growth.

From US patents no. 5,620,721 and 4,425,089 there is thus known grippers of the kind mentioned in the introduction. It is a common feature of these two constructions that they consist of a large number of single parts which are assembled in different ways. They may thus be assembled by welding and/or screwing together of the single parts. As many single parts are provided where interacting abutting surfaces exist, slots and interspaces will appear, where there is a risk of deposits and thereby bacterial growth. Furthermore, by such abutting surfaces between single parts there will be difficulties in performing cleaning in an effective way. Furthermore, in both constructions there are provided many horizontal surfaces which especially may increase the layers of deposits of confectionery products. The thicker the deposit layer, the more difficult it becomes to clean such a surface. Furthermore, confectionery products may drip during production from such horizontal plates down on mould plates or other food equipment placed below the gripper. This will further constitute a risk of contamination and increase the need for cleaning.

The technique described in the US patent no. 4,425,089 is especially problematic and will not fulfil the requirements to the cleaning standard as of today. Thus it has appeared that the construction has been assembled with many screws with threadholes belonging to them. These will act as a fertile soil for bacterials and will be very difficult to clean.

Furthermore, the grippers described in the US publications will be rather difficult to fit. The many basic elements to be mutually connected will thus make the fitting difficult. Furthermore, the common basic rule that an apparatus consisting of fewer parts will be easier to mount and to demount will also be true for the gripper according to the invention. So servicing of the gripper according to one of the US publications will also be difficult as replacement of wear parts will be very difficult since one has to disassemble the hole construction shown in the US publications. A disassembly may be impeded as screw connections forming part of the constructions which may be difficult to disassemble, e.g. because of worn slots, rust formations or wedging of the screws.

It is the purpose with the present invention to indicate a gripper of the kind indicated in the introduction which is more simple to make and to use and which is easy to mount and at the same time is more easy to clean.

This is achieved according to the present invention with a gripper of the kind mentioned in the introduction, which in peculiar in that the housing is formed by a shaped and bent plate wherein the rear wall comprises an opening, that borings for receiving a journal are provided in the side walls, where the release arm is pivotably suspended together with grooves for guiding the clip for displacing this under an acute angle relative to the rear wall, so that the ice lolly is squeezed against the rear wall of the housing by a lateral edge on the clip, and that the spring is a compression spring mounted in parallel with the guide grooves of the clip, as its first end engages a recess in the clip and its second end engages a recess in a support plate mounted loosely in the guide groove.

As the housing is formed by a shaped and bent plate, the number of single elements is reduced compared to the known grippers mentioned above. As the number of single elements is reduced, there will be fewer mounting operations and at the same time, there will be fewer abutting plates between single parts where there is a risk for deposition of confectionery and thereby a risk of bacterial growth. Also, abutting surfaces between single elements will be difficult to clean. The bent plate for the gripper may be made substantially without horizontal surfaces giving rise to deposition of material. This reduces depositions and thereby make the gripper easier to clean. With a housing made by bending of one plate, the need for welding and screwing together of several single parts is avoided. Hereby an easy mounting is achieved. The shaped plate, which preferably is shaped by lasercutting and/or punching, is thus bent to the final shape with a rear wall wherefrom two sidewalls are standing upright.

As the gripper according to the invention is made from fewer parts, according to the common basic rules for construction of apparatuses it will be more reliable and easier to mount and demount so that it will be possible to perform a quick replacement of wear parts. Speaking of wear parts, it will especially be the squeezing device which may be worn and which has to be replaced. This may very easily be replaced without needing to demount the rest of the gripper. This make take place by squeezing the spring together and then turn the clip out of the groove. Thereafter a new clip may be inserted and the spring may be brought into engagement with the recess and the clip again. The gripper will hereafter be ready for use. Each single gripper constitutes an independent unit as each housing may be replaced individually. This is not necessarily possible in the known units. A gripper of the construction described in the US patent no. 5,620,721 will thus comprise a housing which is common for several squeeze devices/release arms. As the gripper according to the present invention is an independent unit, it may be suspended in a flexible way and mutually independent on a supporting frame. This will facilitate the individual mounting and make possible a greater reliability when extracting ice lollies where the lolly has been placed askew in relation to the product.

By using a compression spring for establishing the squeezing force there is achieved a greater reliability and longer lifetime than known from corresponding torsional springs used in the US Patent No. 4 425 089.

The side walls are provided with precisely placed grooves, for example by laser cutting, so that the clip may be guided in these grooves. As the clip is guided in grooves and is in direct engagement with the arm, there is no need of the rod connection between arm and clip as well there is no need for special stops for the clip. The stops are established simply by suitable dimensioning of the groove.

As the clip is provided with recesses which may interact directly with an end part of the arm, there is achieved a very simple construction which is also easy to mount. The springloading of the clip is established by the means of a compression spring mounted between the clip with its first end engaging a recess in the clip and the second end engaging a recess in a support plate which is also mounted in the guide groove. This is a simple mounting.

The spring thus presses the clip in direction against the rear wall. This takes place under an acute angle so that there is a lateral edge on the clip which is used for squeezing the ice lolly. However, this lateral edge of the clip will not be in abutment against the rear wall of the housing in the outermost position of the clip. The more the lolly is pulled, the more the squeezing force in the gripper according to the invention is increased. By dimensioning the length of the guide groove of the clip and the projecting flaps of the clip placed in the groove, the clip is held firm so that the lateral edge is kept away from the rear wall. Hereby the wear is reduced and the lateral edge will then be maintained sharp. This makes possible a sure engagement with an ice lolly.

As there is a small distance between the clip and the rear wall and as these are mutually oriented under an angle so that there is formed a funnel-shaped inlet for the ice lolly, then a sure insertion of the ice lolly between the two elements will always be achieved. For traditional ice lollies the interspace will be about 1 mm wide. Furthermore, the establishing of an interspace between the two elements ensures that there is not formed a closed comer which may hamper a safe cleaning of the gripper.

In order that the ice lolly may be inserted in the interspace between the clip and rear wall in a secure way, it is preferred that the lower edge area of the rear wall is bent away from the clip and that this bending is performed at an edge which is approximately coincident with the position of the lateral edge of the clip. Hereby a lower turned-in part of the clip together with the lower turned-in part of the rear wall will form a funnel-shaped inlet for the ice lolly.

The release arm may be made of a single plate which is bent. However, is preferred to form the release arm as an U-shaped arm with two branches bent in the form of an U and which is suspended near the free end of the branches of the U. Hereby there is achieved a good bending rigidity simultaneously with a large lever effect because of a great length between the turning point and the point of engagement of the manoeuvring arm with the activation means in relation to a short distance between the turning point of the manoeuvring arm and the engagement with the clip.

At the free end of the release arm there is thus at the end of each of the branches of the U a peg engaging a recess situated at each side of the clip in a position in the close proximity of the side wall of the housing. By having the points of engagements between the release arm and the clip placed at the side walls of the housing, there is achieved a stable and secure manoeuvring. At the same time the interspace between the two branches of the release arm will easily be cleaned.

If a plate is mounted in the area between the two side branches of the release arm for reinforcement reasons, this plate will preferably be shaped as a frame. I.e. it has a large opening which facilitates the access to the interspace between the manoeuvring arm and the housing. This contributes to a sure and effective cleaning.

It is preferred that the branches of the release arm are dimensioned with such a thickness that a lateral surface on the branches engages the rear wall of the housing when the clip is in its outermost position where it is squeezed by the spring toward its position close to the rear wall. When such a dimensioning of the branches of the release arm is used, a large contact surface may be established contributing to yield a sure positioning of the outermost position of the clip. Thus the outermost position of the clip closest to the rear wall may be defined by the engagement of the release arm with the rear wall instead of being defined by the engagement of the clip in the guide groove. Hereby it becomes possible to reduce the load and thereby the wear on the gripper whereby the lifetime of the gripper may be increased.

In the gripper according to the invention the recesses for the compression spring in the clip and the support plate will preferably be shaped by laser cutting two grooves. The compression spring will thus be placed with diametrically opposed parts in each of the two grooves. The flap lying between the two punched grooves will thus protrude into the spring. This contributes to support the spring and facilitates the mounting. In order to ensure that the spring do not fall off accidentally or is removed, at least one of the flaps may be bent so that it projects out into the interspace between the windings of the spring.

In order to make allowance for the requirements in the environment in which the gripper is used, it is preferred to make it from stainless steel. However, other materials, as for example plastic or composite material, may also be used.

It has appeared to be advantageous to make the gripper so that the clip is placed under an angle between 15 and 45°, preferably between 5 and 37°, relative to the rear wall. In such a construction the turned-in edge area is placed under an angle between 15 and 85°, preferably between 45 and 60°, relative to the rear wall. In order to achieve the sharp lateral edge it is preferred to laser cut the lateral edge so that a sharp edge is formed for establishing an especially sure engagement with the ice lolly.

Hereafter the invention will be described more closely with reference to the accompanying drawing, where
- Fig. 1: shows a schematic side view of an extracting arm comprising several grippers according to the invention,
- Fig. 2: shows a partially enlarged view of a detail in the extracting arm shown in Fig. 1,
- Fig. 3: shows section view through the extracting arm in Fig. I with a gripper shown in different positions A, B, C,
- Fig. 4: shows a partially enlarged view of a gripper in Fig. 3,
- Fig. 5: shows a partially schematic sectional view through a gripper according to the arrows V-V in Fig. 7,
- Fig. 6: shows a side view of the gripper in Fig. 7
- Fig. 7: shows a side view of a gripper according to the arrows VII-VII in Fig. 6, and
- Fig. 8: shows a view of the spring in the gripper.

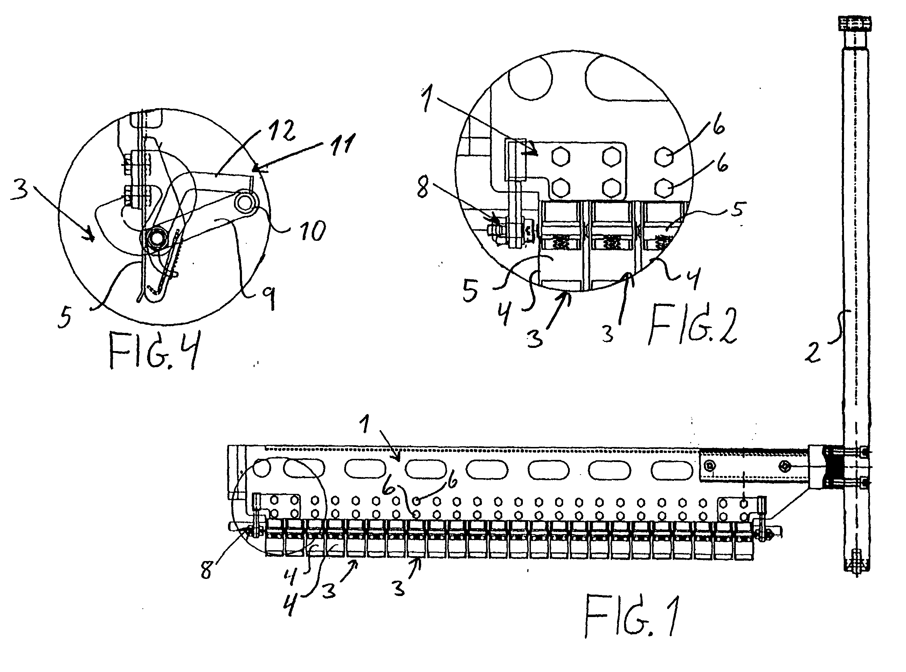

Firstly, there is given a general explanation with simultaneous reference to Figs. 1 - 4. In Fig. 1 there is seen an extracting arm 1 intended for rotating about a central axle 2. The extracting arm is provided with a number of grippers 3 according to the invention. The grippers 3 are placed side by side along the extracting arm 1 and are intended to be aligned above a row of moulds in a rotating freezing plant in order to seize ice lollies and then rotate them to a finishing treatment step, for example dipping into chocolate together with a subsequent packing. As the extracting principle is wellknown for the skilled in the art, it will not be explained in detail.

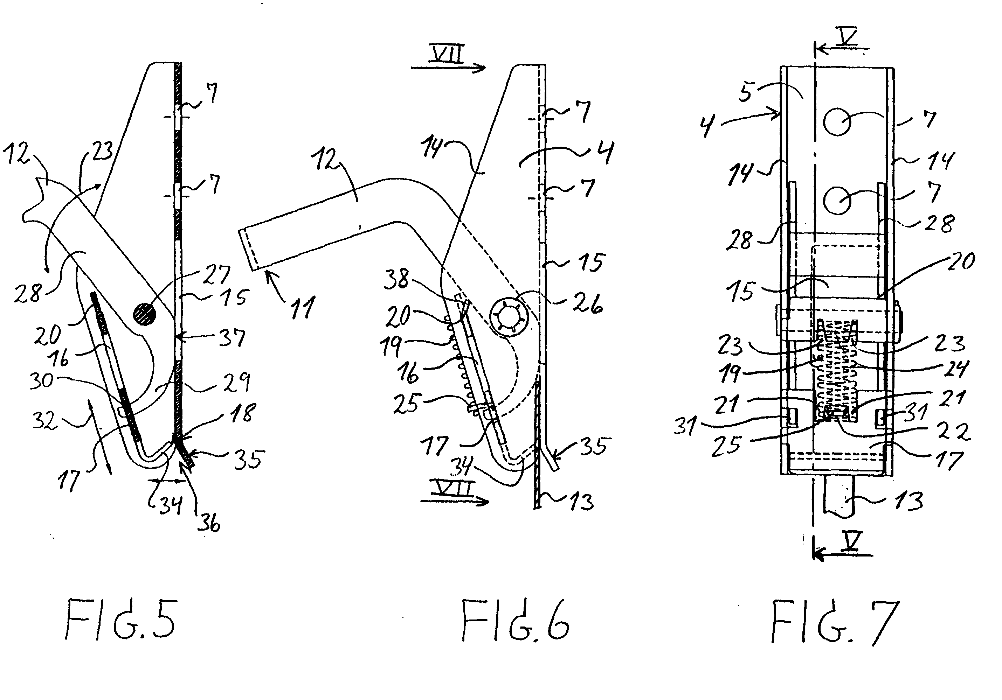

In Fig. 2 there is seen an enlarged view of the outermost end of the extracting arm 1 which is shown by a circle in Fig. 1. The grippers 3 have a housing 4. In Fig. 2 the housing 4 is seen from the rear, so that one sees the rear wall 5 of the housing. The housing 4 is fastened to the extracting arm 1 be means of screws 6 passing through borings 7 (see Fig. 7) in the rear wall 5.

At the outer end of the extracting arm 1 there is seen a suspension 8 supporting an activation arm 9. The activation arm 9 engages the outer end 11 of a release arm 12 in the gripper 3 via a roller 10. The activation arm 9 rotates about the suspension 8 whereby the roller 10 will act on the release arm 12.

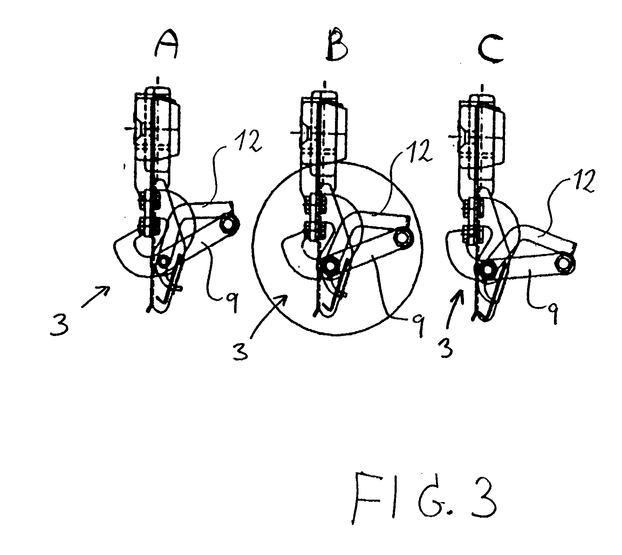

In Fig. 3 there is seen three different positions A, B, C for the gripper 3. In position A the gripper has been moved to its first outermost position where it is completely open. In position B the gripper 3 is placed in a centre position. In position C the activation arm is deactivated, and the gripper will be in a closed state in its second outermost position.

The gripper will be explained more closely in the following with simultaneous reference to the figures 5-7.

The gripper 3 is intended for extracting ice lollies 13. An ice lolly for such an ice lolly product is schematically indicated by 13. The housing 4 of the gripper also comprises two side walls 14 beside the previously mentioned rear wall 5. The rear wall 5 and the side walls 14 are formed by cutting, for example by laser cutting and bending of a plate.

In the rear wall 5 there is formed a quadratic opening 15 besides the borings 7. The opening 15 facilitates access to the inner of the housing and simultaneously facilitates the cleaning. At the inner side of each of the side walls 14 there is punched a groove 16, extending under an acute angle with the rear wall 5. The groove 16 serves for receiving a clip 17 intended for holding the lolly 13 by a lateral edge 18 of the clip 17 engaging the ice lolly 13 so that it is squeezed against the rear wall 5.

The clip 17 receives a spring action from a compression spring 19 supported by a support plate 20, which also is mounted in the groove 16. There is thus spoken of an easy and simple mounting. The spring 19 is held firmly by two grooves being formed in the clip 17. Between these two grooves there is formed a flap 22 protruding into the inner of the spring 19. In the support plate 20 there is also formed two grooves 23 and between these two grooves there is a flap 24, protruding into the inner of the spring. In order to prevent the support plate 20 from falling out of the groove there is formed a flap 38 at the side of the plate which after the mounting is bent down at the outer side of one side wall 14.

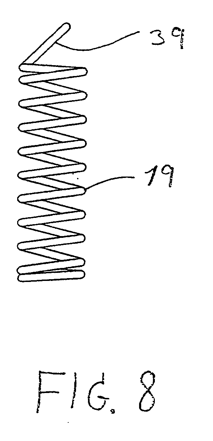

In order to secure the spring 19, an outermost end 25 of the flap 22 has been turned-in so that it protrudes out into subsequent windings on the spring 19. Furthermore, the last winding is bent outwards in order to form a side eye 39 bent 45° in relation to the spring 19. Hereby there is achieved a further securing of the holding of the spring 19. This is illustrated in Fig. 8. Correspondingly, the outermost end of the flap 24 may be turned-in in order to project out between two windings in the spring 19. Hereby there is achieved an even greater security for holding.

In each of the side walls 14 there is furthermore formed a boring 26 serving for receiving an axle 27. The axle 27 supports the release arm 12. The axle 27 is placed close to the rear wall 5, so that a large lever appears between the axle 27 and the outer end 11 of the release arm 12, which end 11 is acted on by the activation means 9.

The release arm 12 is U-shaped and has two branches 28. At the lower end 29 of each branch 28 there is a peg 30 engaging a recess 31 in each side of the clip 17 at a position near the side walls 14 of the housing. This ensures a stable engagement and a stable operation of the clip 17 with respect to its displacement according to the arrow 32 when the release arm 12 is pivoted according to the arrow 33 about the axle 27.

The clip 17 will be squeezed against the position shown in Fig. 5 under influence of the spring 19. This corresponds to the second outermost position of the gripper shown in Fig. 3C. By pivoting the release arm 12 upwards against the position shown in Fig. 3B, the clip will be displaced upwards in the groove against the action of the spring 19. This displacement may take place to the first outermost position illustrated in Fig. 3A. In this outermost position, the interspace between the lateral edge 18 and the rear wall 5 will be sufficient large so that an ice lolly 13 may be placed into or released from the gripper.

In Fig. 5 the clip 17 has been brought to its outermost position closest to the rear wall 5. It is seen that the lateral edge 18 is situated at a small distance from the rear wall. The clip 17 has a turned-in area 34 at its lower end which together with a lowermost turned-in area 35 of the rear wall form a funnel-shaped inlet 36 for the ice lolly 13. Furthermore, it appears from the Fig. 5 that the branches 28 of the release arm 12 are dimensioned so that a lateral edge 37 forms a contact surface engaging the rear wall 5 of the housing. Hereby it is possible to achieve a greater contact surface and thereby reduce the wear on the gripper.

The shown gripper 3 is made of stainless steel and preferably with a material thickness about 1 mm. Alternatively, it will be possible to make the gripper of alternative material, as for example ceramics, plastic or aluminium in adjusted alloys. Also, it will be possible to design the housing with a coating with the purpose of increasing the hardness and thereby the resistance against wear.

The gripper 3 has an important function by a selfincreasing squeezing action. This is established because of the oblique position of the clip 17 relative to the rear wall 5. Hereby it becomes possible to hold the ice lolly 13 irrespectively of the force used for pulling the ice lolly 13 out of the locked gripper. If a force occurs attempting to pull the ice lolly 13 out of the gripper, this force will assist the force for the spring in a selfincreasing way. Therefore, it is probable that the ice lolly 13 cannot be pulled out, but rather will be cut off by the engagement between the sharp lateral edge 18 and the rear wall 5. In order to ensure that the edge 18 is as sharp as possible it may be sharpened so that there is formed a sharp edge for engaging the ice lolly 13.

The gripper 3 is friendly for assembling. Thus the support plate 20 and the clip 17 are placed easily in the groove 16, whereafter the spring 19 is placed between the two elements. Hereafter the release arm 12 may be placed in its position whereafter the axle 27 is mounted. Hereafter the gripper is ready for mounting on the release arm 1. The gripper 3 is thus also easy to disassemble which means that the wear parts easily may be replaced when there is a need for this.

The gripper 3 is furthermore easy to clean. The gripper is made with a few surfaces covering each other and with an easy access to the inner of the housing 4 via the opening 15 in the rear wall, the opening between the two branches of the release arm 12 and by access to the interspace between the support plate 20 and the clip 17. Also, the inner of the compression spring will be freely accessible and easy to clean.

Even though in the figures there is shown a single embodiment of the gripper according to the invention, it will be possible to design it in other ways. Thus it will for example be possible to make the gripper with other shapes. Thus, for example, it will be possible to make the clip 17 without a turned-in edge area 34. It will also be possible to make the release arm 12 as a plate-shaped arm (instead of a U-formed arm) suspended centrally in the housing and having a single peg, which engages a central recess in the clip 17.

## Claims

1. A gripper (3) for use in extracting ice lollies (13) frozen in moulds, which gripper comprises a housing (4) having a rear wall (5) and two side walls (14) extending therefrom and with a spring loaded clip (17) arranged for squeezing firmly the ice lolly (13) against the rear wall (5) of the housing (4), and which can be released by means of an arm (12) suspended in the side walls (14) of the housing (4), and which has a part for engaging the clip (17), **characterised in that** the housing (4) is formed by a shaped and bent plate wherein the rear wall (5) comprises an opening (15), that borings (7) for receiving a journal are provided in the side walls (14), where the release arm is pivotably suspended together with grooves (16) for guiding the clip (17) for displacing this under an acute angle relative to the rear wall (5), so that the ice lolly (13) is squeezed against the rear wall (5) of the housing (4) by a lateral edge (18) on the clip (17), and that the spring is a compression spring (19) mounted in parallel with the guide grooves of the clip (17), as its first end engages a recess in the clip and its second end engages a recess in a support plate (20) mounted loosely in the guide groove.

2. A gripper (3) according to claim 1, **characterised in that** the edge area of the clip (17) is turned-in so that a funnelshaped inlet (36) for the ice lolly (13) is formed when the clip (17) is brought to its outermost position by the spring force with the lateral edge (18) in a position in close proximity of the rear wall (5).

3. A gripper (3) according to claim 2, **characterised in that** the lower edge area of the rear wall (5) is bent away from the clip (17), and that the edge formed by the bending is approximately coincident with the position of the clip (17) in said outermost position close to the rear wall (5).

4. A gripper according to claim 1, 2 or 3, **characterised in that** the release arm (12) is a U-shaped arm suspended at a point close to the free ends of the branches (28) of the U, that at the free end of the branch (28) there is a peg (30) engaging a recess (31) at each side of the clip (17) in close proximity of the side walls (14) of the housing (4).

5. A gripper (3) according to claim 4, **characterised in that** the branches (28) of the release arm (12) are dimensioned with a thickness, so that a contact surface engages the rear wall (5) of the housing (4) when the clip (17) is in its outermost position close to the rear wall (5).

6. A gripper (3) according to any preceding claim, **characterised in that** the housing (4) is formed by laser cutting.

7. A gripper (3) according to claim 1, **characterised in that** the recesses (31) are two laser-cut grooves, and that the flap (22) of the clip (17) and support plate (20), respectively, lying between the grooves protrudes into the inner of the spring (19), and that at least one of the flaps is bent out of the plane of the plate in order to project out between two subsequent windings of the spring (19).

8. A gripper (3) according to any preceding claim, **characterised in that** it is made of stainless steel.

9. A gripper (3) according to any preceding claim, **characterised in that** the clip (17) is disposed with an angle of between 15 and 45°, preferably between 25 and 30°, relative to the rear wall (5), and that the turned-in edge area is disposed with an angle between 15 and 85°, preferably between 45 and 60° relative to the rear wall (5).

10. A gripper (3) according to claim 9, **characterised in that** the lateral edge has been made sharp by laser cutting in order to form a sharp edge for engaging the ice lolly (13).

## Patentansprüche

1. Greifer (3) zur Entnahme von gefrorenem Eis am Stiel (13), das in Formen eingefroren ist, welcher Greifer einen Kasten (4) umfasst, der eine Hinterwand (5) und zwei Seitenwände (14) umfasst, die sich mit einer Klemmplatte (17) davon verlängern und, die zum Festpressen des gefrorenem Eis am Stiel (13) gegen die Hinterwand (5) des Kastens (4) vorgesehen ist, und welcher mittels eines Arms (12) ausgelöst werden kann, der in den Seitenwänden (14) des Kastens (4) aufgehängt ist, und welcher einen Teil zum Eingriff mit der Klemmplatte (17) umfasst, **dadurch gekennzeichnet, dass** der Kasten (4) von einer geformten und gebogenen Platte gebildet wird, worin die Hinterwand (5) eine Öffnung (15) umfasst, dass Bohrungen zum Empfang eines Zapfens in den Seitenwänden (14) vorgesehen sind, worin der Auslöserarm zusammen mit Rillen (16) zur Führung der Klemmplatte (17) schwenkbar aufgehängt ist, um diese unter einem spitzen Winkel relativ zur Hinterwand (5) zu verschieben, damit das Eis am Stiel (13) gegen die Hinterwand (5) des Kastens (4) von einer lateralen Kante (18) auf der Klemmplatte (17) gepresst wird, und dass die Feder eine Kompressionsfeder (19) ist, die parallel zu den Führungsrillen der Klemmplatte (17) montiert ist, da ihr erstes Ende mit einer Vertiefung in der Klemmplatte im Eingriff ist, und ihr zweites Ende mit einer Vertiefung in einer Unterstützungsplatte (20) im Eingriff ist, die in die Führungsrille lösbar montiert ist.

2. Greifer (3) nach Anspruch 1, **dadurch gekennzeichnet, dass** das Kantengebiet der Klemmplatte (17) eingezogen wird, damit dass eine trachtförmige Öffnung (36) zum Eis am Stiel (13) gebildet wird, wenn die Klemmplatte (17) zu ihrer äußersten Position von der Federkraft mit der lateralen Kante (18) in einer Position nahe zur Hinterwand (5) gebracht wird.

3. Greifer (3) nach Anspruch 2, **dadurch gekennzeichnet, dass** das niedrigere Kantengebiet der Hinterwand (5) von der Klammer (17) weggebogen wird, und das die Kante, die vom gebogenen Teil gebildet wird, fast zusammenfallend mit der Position der Klemmplatte (17) in der erwähnten äußersten Position nahe zur Hinterwand (5) ist.

4. Greifer nach Anspruch 1, 2 oder 3, **dadurch gekennzeichnet, dass** der Auslöserarm (12) wie ein U-förmiger Arm vorgesehen ist, der in einem Punkt nahe zu den freien Enden der Zweigen (28) des U's aufgehängt ist, dass am freien Ende des Zweigs (28) ein Dübel (30) vorgesehen ist, der mit einer Vertiefung (31) an beiden Seiten der Klemmplatte (17) sehr nahe zu den Seitenwänden (14) des Kastens (4) im Eingriff ist.

5. Greifer (3) nach Anspruch 4, **dadurch gekennzeichnet, dass** die Zweige (28) des Auslöserarms (12) mit einer solchen Dicke dimensioniert ist, damit die Kontaktfläche mit der Hinterwand (5) des Kastens (4) im Eingriff ist, wenn die Klemmplatte (17) in ihrer äußersten Position nahe zur Hinterwand (5) ist.

6. Greifer (3) nach jedem der vorigen Ansprüche, **dadurch gekennzeichnet, dass** der Kasten (4) durch Laserschneiden ausgebildet wird.

7. Greifer (3) nach Anspruch 1, **dadurch gekennzeichnet, dass** die Vertiefungen (31) wie zwei lasergeschnittene Rillen vorgesehen sind, und dass die Lasche (22) der Klemmplatte (17) respektiv und der Unterstützungsplatte (20), die zwischen die. Rillen liegen, zum Inneren der Feder (19) durchdrängt, und dass mindestens eine der Laschen aus der Ebene der Platte gebogen wird, um nach außen zwischen zwei nachfolgenden Wicklungen der Feder (19) vorzuspringen.

8. Greifer (3) nach jedem der vorigen Ansprüche, **dadurch gekennzeichnet, dass** er aus rostfreiem Stahl hergestellt ist.

9. Greifer (3) nach jedem der vorigen Ansprüche, **dadurch gekennzeichnet, dass** die Klemmplatte (17) mit einem Winkel zwischen 15-45° vorgesehen ist, vorzugsweise zwischen 25-30°, relativ zur Hinterwand (5), und dass das eingezogene Kantengebiet mit einem Winkel zwischen 15-85° vorgesehen ist, vorzugsweise zwischen 45-60° relativ zur Hinterwand (5).

10. Greifer (3) nach Anspruch 9, **dadurch gekennzeichnet, dass** die laterale Kante durchs Laserscheiden geschärft worden ist, um eine scharfe Kante zum Eingriff des Eises am Stiel (13) zu bilden.

## Revendications

1. Outil de préhension (3) pour l'extraction de bâtonnets glacés (13) congélés en moules, ledit outil de préhension comporte un carter (4) comprennant une paroi arrière (5) et deux parois latérales (14) s'étendant de la paroi arrière et avec une plaque de serrage à ressort (17) agencée pour presser fermement le bâtonnet glacé (13) contre la paroi arrière (5) du carter (4), et qui peut être relâché au moyen d'un bras (12) suspendu dans les parois latérales (14) du carter (4), et qui comporte une partie pour engagement avec la plaque de serrage (17), **caractérisé** en ce que le carter (4) est formé par une plaque formée et pliée, la paroi arrière (5) comportant une ouverture (15), que des alésages (7) pour recevoir un arbre sont prévus dans les parois latérales (14) où le bras de déclenchement est guidé en rotation avec des rainures (16) pour guider la plaque de serrage (17) pour la déplacer sous un angle aigu par rapport à la paroi arrière (5) de sorte que le bâtonnet glacé (13) est pressé contre la paroi arrière (5) du carter (4) par un bord latéral (18) de la plaque de serrage (17), et que le ressort est un ressort de pression (19) monté parallèlement aux rainures de guidage de la plaque de serrage (17), étant donné que sa première extrémité est engagée dans un évidement dans la plaque de serrage et sa deuxième extrémité est engagée dans une plaque de support (20) montée de manière détachable dans la rainure de guidage.

2. Outil de préhension (3) selon la revendication 1, **caractérisé en ce que** la zone du bord de la plaque de serrage (17) est repliée de sorte qu'une ouverture conique (36) pour le bâtonnet glacé (13) est formée lorsque la plaque de serrage (17) est amené à sa position extrême par la force du ressort avec le bord latéral (18) dans une position dans l'approximité étroite de la paroi arrière (5).

3. Outil de préhension (3) selon la revendication 2, **caractérisé en ce que** la zone du bord inférieur de la paroi arrière (5) est pliée loin de la plaque de serrage (17), et que le bord formé par le pliage est sensiblement confondu avec la position de la plaque de serrage (17) dans la position extrême proche de la paroi arrière (5).

4. Outil de préhension selon la revendication 1, 2, ou 3, **caractérisé en ce que** le bras de déclenchement (12) est un bras en forme de U suspendu dans un point proche des extrémités libres des branches (28) de l'U, qu'à l'extrémité libre de la branche (28) une cheville (30) engage un évidement (31) à chaque côté de la plaque de serrage (17) dans le proche voisinage des parois latérales (14) du carter (4).

5. Outil de préhension (3) selon la revendication 4, **caractérisé en ce que** les branches (28) du bras de déclenchement (12) sont dimensionnées avec une épaisseur de sorte qu'une surface de contact engage la paroi arrière (5) du carter (4) lorsque la plaque de serrage (17) est dans sa position extrême près de la paroi arrière (5).

6. Outil de préhension (3) selon l'une quelconque des revendications précédentes, **caractérisé en ce que** le carter (4) est formé par découpage au laser.

7. Outil de préhension (3) selon la revendication 1, **caractérisé en ce que** les évidements (31) sont deux rainures découpées au laser et que le volet (22) de la plaque de serrage (17) respectivement la plaque de support (20) situé entre les rainures pénètre dans l'intérieur du ressort (19), et qu'au moins un des volets est plié en dehors du niveau de la plaque pour se répandre entre deux spires subséquentes du ressort (19).

8. Outil de préhension (3) selon l'une quelconque des revendication précédentes, **caractérisé en ce qu'**il est fabriqué en acier inoxydable.

9. Outil de préhension (3) selon l'une quelconque des revendication précédentes, **caractérisé en ce que** la plaque de serrage (17) est placée avec un angle d'entre 15 et 45°, de préférence entre 25 et 30°, par rapport à la paroi arrière (5) et que la zone du bord pliée est placée avec un angle d'entre 15 et 85°, de préférence entre 45 et 60° par rapport à la paroi arrière (5).

10. Outil de préhension (3) selon la revendication 9, **caractérisé en ce que** le bord latéral a été chanfreiné par le découpage au laser pour former une arête aiguë pour engagement du bâtonnet glacé.
